# EUROPEAN PATENT SPECIFICATION

(11) **EP 1 919 719 B1**
(45) Date of publication and mention of the grant of the patent: **16.04.2014**
(21) Application number: 06788659.8
(22) Date of filing: 27.07.2006
(51) Int. Cl.: B60B 27/00

(54) **AXLE SPINDLE AND WHEEL END ASSEMBLY**
ACHSSCHENKEL UND RADENDENANORDNUNG
FUSEE D'ESSIEU ET ENSEMBLE D'EXTREMITE DE ROUE

(30) Priority: 02.09.2005 US 713887 P
(43) Date of publication of application: 14.05.2008
(73) Proprietor: Hendrickson International Corporation, Itasca, IL 60143 (US)
(72) Inventor: WHITE, Jay, Massillon, Ohio 44646 (US)
(74) Representative: Stoner, Gerard Patrick
(86) International application number: PCT/US2006/029205
(87) International publication number: WO 2007/030220

(56) References cited:
- EP-A- 0 733 494
- WO-A-97/42425
- WO-A-97/48919
- US-A- 5 328 275
- US-A- 5 402 560

## Description

### BACKGROUND OF THE INVENTION

### TECHNICAL FIELD

The invention relates to vehicle axles and wheel end assemblies, and in particular to axles and wheel end assemblies for heavy-duty vehicles, such as tractor-trailers. More particularly, the invention is directed to a heavy-duty axle spindle and wheel end assembly that are capable of selectively accommodating a conventional dual-wheel, standard-tire configuration and a single-wheel, wide-tire configuration in a robust, yet economical and lightweight manner.

### BACKGROUND ART

For many years, the heavy-duty vehicle industry has utilized wheel end assemblies which typically are mounted on each end of one or more non-drive axles. Each wheel end assembly typically includes a hub rotatably mounted on a bearing assembly that in turn is immovably mounted on the outboard end of the axle, commonly known as an axle spindle. As is well know to those skilled in the art, for normal operation of the wheel end assembly to occur, the bearing assembly and surrounding components must be lubricated with grease or oil. Therefore, the wheel end assembly must be sealed to prevent leakage of the lubricant, and also to prevent contaminants from entering the assembly, both of which could be detrimental to its performance. More specifically, a hubcap is mounted on an outboard end of the wheel hub, and a main seal is rotatably mounted on an inboard end of the hub and the bearing assembly in abutment with the axle spindle, resulting in a closed or sealed wheel end assembly.

While most wheel end assemblies include these general features, the design and arrangement, of the hub, bearing assembly, hubcap, main seal, and other components, as well as the axle spindle, vary according to the specific vehicle design and its anticipated uses. For example, some heavy-duty vehicles include axle spindles and wheel end assemblies designed for a dual-wheel, standard-tire configuration in which two wheels, each having a respective tire mounted thereon, are mounted on a single hub.

In a dual-wheel, standard-tire configuration, the focus of the load forces acting on the axle spindle and the wheel end assembly during operation of the vehicle, typically referred to in the art as the load line, acts on a plane that extends generally vertically through the axle spindle and the wheel end assembly at a point between the two wheels. Such a load line is located further inboard than load lines of other wheel configurations, to be discussed below, thus creating a shorter moment arm than that created by other wheel configurations. A shorter moment arm in turn creates less loading on the components of the axle spindle and the wheel end assembly than a wheel configuration that has a load line which is further outboard and thus has a longer moment arm. As a result, the hub, bearing assembly and axle spindle for a dual-wheel, standard-tire configuration typically are of a comparatively less robust construction than the hub, bearing assembly and axle spindle used with types of wheel configurations that have a load line which is further outboard. This less robust construction enables the axle spindle and wheel end assembly to be comparatively lightweight and economical for dual-wheel, standard-tire configurations, which is desirable in the heavy-duty vehicle industry.

Due to common wheel attachment interfaces, such a less robust axle spindle and wheel end assembly construction may also selectively accommodate a single-wheel, wide-tire configuration, in which one wheel with a single wide tire mounted thereon is in turn mounted on the hub. This single wide tire is a high weight capacity and high speed capacity tire that is intended to replace a dual-wheel, standard-tire configuration. However, the less robust construction of the axle spindle and the wheel end assembly limits the range of single-wheel, wide-tire types to ones having only a zero offset or a near-zero offset, such as 14mm (0.56-inch) offset, to keep the load line in a location that is similar to that of the above-described dual-wheel, standard-tire configuration. Any other type of single-wheel, wide-tire configuration moves the load line further outboard, and thus places an increased load on the outboard bearing of the bearing assembly, which causes that bearing to experience increased fatigue loading and significantly reduces its useful life.

More particularly, a zero-offset wheel is one in which the vertical centreline of the wheel is generally aligned with the mounting surface of the hub or brake drum, which reduces the operational load forces on the axle spindle and the wheel end assembly, and on the outboard bearing in particular, However, a single-wheel, wide-tire with a zero offset has a narrower wheel base than a dual-wheel, wide tire configuration, which creates certain disadvantages when it is desired to change from one type of wheel configuration to another on a heavy-duty vehicle, such as a semi-trailer. For example, if it is desired to change from a dual-wheel, standard-tire configuration to a single-wheel, wide-tire configuration and maintain roll stability of the vehicle, the frame, subframe, axle and/or suspension assemblies of the semi-trailer must be modified to move the wheels further apart and widen the wheel base. In addition, if it is desired to return to a dual-wheel, standard-tire configuration after such modifications for a zero-offset, single-wheel, wide-tire configuration, additional modifications must be performed to move the wheels closer together, so the tires do not extend outboardly past the body of the vehicle and exceed legal restrictions on the width of a heavy-duty vehicle. The time and expense for such modifications associated with roll stability thereby reduce the desirability of zero-offset single-wheel, wide-tire configuration for a less robust axle spindle and wheel end assembly.

In contrast, axle spindles and wheel end assemblies that are of a more robust construction are able to selectively accommodate a wider range of single-wheel, wide-tire configurations including wheels having a 51mm (two-inch)offset, as well as a dual-wheel, standard-tire configuration. A 51mm (two-inch) offset wheel is one in which the vertical centreline of the wheel is located about 51mm (two inches) outboard of the mounting surface of the hub or brake drum, which creates increased operational load forces. That is, the load line acts on a vertical plane that is further outboard than the load line associated with a dual-wheel, standard-tire configuration or a zero-offset, single-wheel configuration. Since the load line of the 51mm (two inch) offset wheel configuration is further outboard, a greater moment arm is created, leading to increased loading on the components of the axle spindle and the wheel end assembly, including the hub and bearing assembly, especially the outboard bearing of the bearing assembly, as well as the axle spindle, to obtain acceptable bearing and spindle life.

As mentioned above, the axle spindles and wheel end assemblies of more robust construction also are able to accommodate a dual-wheel, standard-tire configuration. To this end, when a heavy-duty vehicle such as a semi-trailer uses a single-wheel, wide-tire configuration, the advantage of the 51mm (two-inch) offset wheel is that such wheels generally include a relatively wide wheel base that is roll stable. As a result, modifications of the frame, subframe, axle and/or suspension assemblies are not necessary when it is desired to change from a dual-wheel, standard-tire configuration to a single-wheel, wide-tire configuration, or back to a dual-wheel, standard-tire configuration. However, the disadvantage of such more robust axle spindles and wheel end assemblies is that they are typically relatively heavy and/or expensive, and are not optimized for the different load line conditions of a dual-wheel, standard tire configuration and a single-wheel, wide tire configuration, which are undesirable characteristics.

The capability of certain heavy-duty vehicles to selectively accommodate a dual-wheel, standard-tire configuration and a single-wheel, 51 mm (two-inch) offset wide-tire configuration is becoming increasingly important in the heavy-duty vehicle industry. For example it is becoming more common for the owner of a fleet of heavy-duty vehicles to use a single wheel, 51 mm (two-inch) offset wide-tire configuration on his/her vehicles, since such a wheel configuration is associated in the industry with high performance, lower weight, and fuel savings. However, when the owner sells the vehicles, the owner will convert them to dual-wheel, standard tire configuration to make them more attractive in the used vehicle market. In order to obtain the legal maximum axle rating for a single-wheel, 51 mm (two-inch) offset wide-tire configuration, which by way of example is 9.08 tonnes (20,000 pounds), and for a dual-wheel., standard-tire configuration, which by way of example is 10.44 tonnes (23,000 pounds), an axle spindle and wheel end assembly of more robust construction must be used, as described above. However, the increased weight and/or cost associated with the more robust axle spindle and wheel end assembly are undesirable.

These disadvantages of prior art axle spindles and wheel end assemblies make it desirable to develop an axle spindle and wheel end assembly that are capable of selectively accommodating a dual-wheel, standard-tire configurations and a single wheel, 51 mm (two-inch) offset wide-tire configuration in a relatively economical and lightweight manner. The present invention satisfies this need.

### SUMMARY OF THE INVENTION

An objective of the present invention is to provide an axle spindle and a wheel end assembly that are capable of selectively accommodating a dual-wheel, standard-tire configuration and a single-wheel 51 mm (two inch) offset wide-tire configuration in a relatively economical manner.

Another objective of the present invention is to provide an axle spindle and a wheel end assembly that are capable of selectively accommodating a dual-wheel, standard-tire configuration and a single wheel 51 mm (two-inch) offset wide-tire configuration in a relatively lightweight manner.

Yet another objective of the present invention is to provide an axle spindle and a wheel end assembly that are capable of selectively accommodating a dual-wheel, standard-tire configuration and a single-wheel, wide-tire configuration without modifications to the vehicle frame, subframe, axle and/or suspension assemblies.

These objectives and others are obtained by the axle spindle and wheel end assembly combination of the present invention as defined in claim 1. A heavy-duty vehicle includes an axle having a central portion and a pair of axle spindles. The axle central portion has a pair of ends and each one of the pair of axle spindles is connected to a respective one of the central portion ends. The heavy-duty vehicle also includes a pair of wheel end assemblies, and each one of the pair of wheel end assemblies is rotatably mounted on a respective one of the axle spindles. Each one of the axle spindle and the wheel end assembly combination includes an inboard bearing immovably mounted on the axle spindle and an outboard bearing immovably mounted on the axle spindle outboardly of the inboard bearing. The inboard and outboard bearings have respective inner diameters of generally the same size, and the wheel end assembly is capable of utilizing a heavy-duty vehicle stock-type bearing for at least one of the inboard and outboard bearings. A wheel hub is rotatably mounted on the inboard and said outboard bearings, and the wheel end assembly selectively accommodates a dual-wheel, standard-tire configuration and a single-wheel, wide-tire configuration, including a 51mm (two-inch) offset type wheel for the single-wheel, wide-tire configuration.

### BRIEF DESCRIPTION OF THE DRAWINGS

The preferred embodiment of the present invention, illustrative of the best mode in which applicant has contemplated applying the principles, is set forth in the following description and is shown in the drawings, and is particularly and distinctly pointed out and set forth in the appended claims.
FIG. 1 is a fragmentary longitudinal cross-sectional view of a portion of an axle and a less robust axle spindle and wheel end assembly of the prior art;
FIG. 2 is a fragmentary longitudinal cross-sectional view of a portion of an axle and a first more robust axle spindle and wheel end assembly of the prior art;
FIG. 3 is a fragmentary longitudinal cross-sectional view of a portion of an axle and a second more robust axle spindle and wheel end assembly of the prior art;
FIG. 4 is a fragmentary cross-sectional perspective view of the axle spindle and wheel end assembly of the present invention, shown with a hubcap installed on the wheel end assembly; and
FIG. 5 is a fragmentary longitudinal cross-sectional view of the axle spindle and wheel end assembly shown in FIG. 4, but without the hubcap on the wheel end assembly.

Similar numerals refer to similar parts throughout the drawings.

### DESCRIPTION OF THE PREFERRED EMBODIMENT

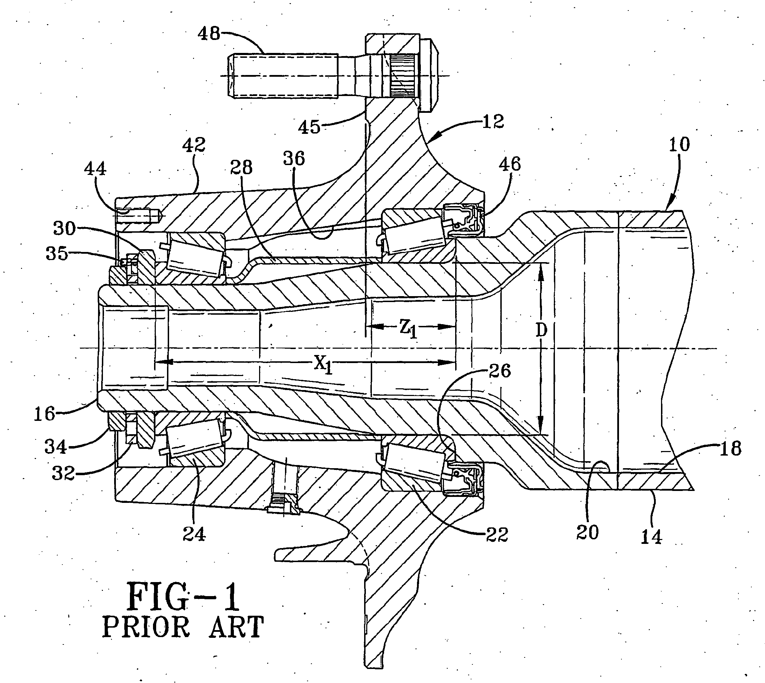

In order to better understand the axle spindle and wheel end assembly of the present invention, a less robust prior art axle spindle and wheel end assembly for a heavy-duty vehicle, typically used for an economical dual-wheel, standard-tire configuration, is shown in FIG. 1 and now will be described. Axle 10 depends from and extends transversely across the trailer of a heavy-duty tractor-trailer (not shown). A typical heavy-duty tractor-trailer includes one or more non-drive axles 10 suspended from the trailer, with each of the axles having a wheel end assembly 12 mounted on each end of the axle. For the sake of clarity, only one axle end and wheel end assembly 12 will be described herein. Axle 10 includes a central tube 14, and an axle spindle 16 is integrally connected by any suitable means, such as welding, to each end of the central tube. Axle central tube 14 generally is tubular-shaped and is formed with an internal cavity 18. Axle spindle 16 is tapered and is formed with a correspondingly tapered internal cavity 20.

Wheel end assembly 12 includes a bearing assembly having an inboard bearing 22 and an outboard bearing 24 immovably mounted on axle spindle 16. That is, inboard bearing 22 is mounted on the outer diameter of axle spindle 16 with its inboard surface in abutment with a shoulder 26 formed in the axle spindle. Outboard bearing 24 is mounted on axle spindle 16 near the outboard end of the axle spindle, and thereby includes a smaller inner diameter than inboard bearing 22 due to the taper of the axle spindle. The reduced inner diameter of outboard bearing 24, when compared to the inner diameter of inboard bearing 22, correspondingly reduces the ability of the outboard bearing to withstand operational load forces to the same extent as the inboard bearing, and the outboard bearing thus is generally less robust than the inboard bearing.

More specifically, inboard and outboard bearings 22, 24 are standard heavy-duty vehicle stock bearings. For example, inboard bearing 22 typically is a tapered roller bearing having an inner diameter of about 90 millimeters, an outer diameter of about 147 millimeters, a width of about 40 millimeters, a pure radial load rating of about 20,100 Nm (14,800 pound-feet), a pure thrust load rating of about 11,420 Nm (8,420 pound-feet), and an industry standard part number of HM218248 (cone)/HM218210 (cup). As an additional example, outboard bearing 24 typically is a tapered roller bearing having an inner diameter of about 66.68 mm (2.625 inches), an outer diameter of about 122.2mm (4.8125 inches), a width of about 38.1 mm (1.500 inches), a pure radial load rating of about 15,500 Nm (12,200 pound-feet), a pure thrust load rating of about 9530 Nm (7,030 pound-feet), and an industry standard part number of HM212049 (cone)/HM212011 (cup).

A cavity 36 is formed between inboard and outboard bearings 22, 24 and a correspondingly-tapered bearing spacer 28 optionally is disposed between the bearings in the cavity to conveniently maintain proper spacing between the bearings. A nut assembly, which includes an inboard nut 30, a lock washer 32, an outboard nut 34, and a set screw 35, threadably engages the outboard end of axle spindle 16 and secures bearings 22, 24 and bearing spacer 28 in place. Bearings 22, 24 are typically spaced such that the distance from the inboard surface of the inboard bearing proximate shoulder 26 to the outboard surface of the outboard bearing proximate nut 30, indicated in FIG. 1 as X₁, is about (6.42 inches or) 163 millimeters, the significance of which will be discussed in greater detail below.

A wheel hub 42 is rotatably mounted on inboard and outboard bearings 22, 24 in a manner well known to those skilled in the art. A hubcap (not shown) is mounted on the outboard end of hub 42 by a plurality of bolts that each pass through a respective one of a plurality of openings formed in the hubcap, and threadably engage a respective one of a plurality of aligned threaded openings 44 formed in the hub. In this manner, the hubcap closes the outboard end of wheel end assembly 12. A main continuous seal 46 is rotatably mounted on the inboard end of wheel end assembly 12 and closes the inboard end of the assembly. More particularly, seal 46 is mounted on wheel end assembly 12 in a suitable manner and radially bridges hub 42 and axle spindle 16 to seal cavity 36. In order to maintain proper lubrication and operation of inboard and outboard bearings 22, 24, a suitable amount of lubricant (not shown) is introduced into cavity 36. A plurality of interference fit studs 48 (only one shown) are used to mount a brake drum, tire rim and tire (not shown) against a mounting face 45 of hub 42 and thus on wheel end assembly 12.

One aspect of prior art axle spindle 16 and wheel end assembly 12 that is potentially disadvantageous is the relationship between distance X₁, which is the distance from the inboard surface of inboard bearing 22 to the outboard surface of outboard bearing 24, and the maximum diameter of axle spindle 16 at the bearings, indicated as D. In order to achieve the ever-present goal of reducing weight in heavy-duty vehicles, it is desirable to shorten the length of axle spindle 16 and wheel hub 42 relative to the diameter of the axle spindle as much as possible. Therefore, the relationship between distance X₁ and diameter D, which may be expressed as a ratio R₁, becomes an indicator of how effectively a particular axle spindle and wheel end assembly achieves weight reduction through the design of axle spindle 16 and wheel hub 42. As mentioned above, distance X₁ is about 163 millimeters, and the maximum diameter D of axle spindle 16 at bearings 22, 24 is about 90 millimeters, and thus ratio R₁, which is X₁ divided by D, is about 1.81. This value for R₁ is relatively large, as it is desirable to achieve a smaller ratio, such as below about 1.50. As a result, while prior-art axle spindle 16 and wheel end assembly 42 are suitable for their intended purpose, and are considered to be lightweight in comparison to other prior art systems, their design does not achieve an optimum weight savings.

Another aspect of prior art axle spindle 16 and wheel end assembly 12 that is potentially disadvantageous is the axial location of mounting face 45 of hub 42, which does not optimize the accommodation of a dual-wheel, standard-tire configuration and a 51 mm (two-inch) offset single-wheel, wide-tire configuration. More particularly, the axial location of hub mounting face 45 is dictated by the load line of the wheel configuration for which axle spindle 16 and wheel end assembly 12 are designed to accommodate. The axial location of hub mounting face 45 is indicated by the distance from the inboard surface of inboard bearing 22 to the hub mounting face, which is shown in FIG. 1 as Z₁. For certain specific wheel designs associated with prior art axle spindle 16 and wheel end assembly 12, Z₁ is about 45.5 mm(1.79 inches), and may be up to about 48.5 mm (1.91 inches) for other specific wheel designs associated with this axle spindle and wheel end assembly. Such a minimum length of 45.5 mm (1.79 inches) for distance Z₁ is considered to be relatively long, which indicates that the location of hub mounting face 45 is dictated by a dual-wheel, standard-tire configuration, and therefore is not optimized for both the dual-wheel, standard-tire configuration and a 51 mm (two-inch) offset single-wheel, wide-tire configuration.

In addition, a particular feature that contributes to the less robust, and hence more economical design of prior art axle spindle 16 and wheel end assembly 12 is the tapered shape of the axle spindle. This taper of axle spindle 16 creates a correspondingly small outer diameter at the outboard end of the axle spindle, which in turn causes the diameter of outboard bearing 24 to be smaller than the diameter of inboard bearing 22, as mentioned above. The reduced diameter of outboard bearing 24, while enabling the bearing to be economical, correspondingly reduces the ability of the bearing to satisfactorily withstand operational load forces generated by the industry-preferred 51 mm (two-inch) offset single-wheel, wide-tire type configuration, as described above.

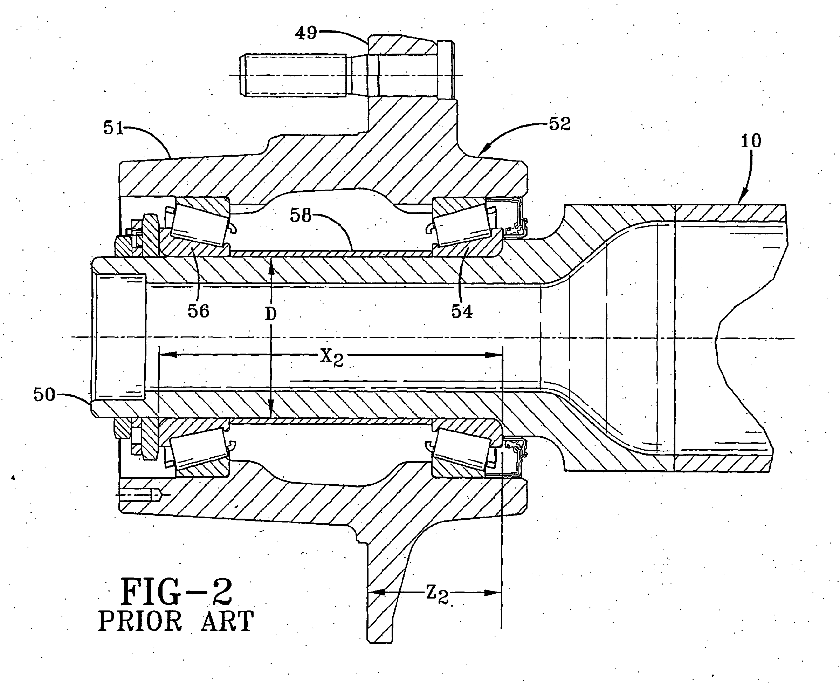

To satisfactorily withstand the forces associated with a 51 mm (two-inch) offset single-wheel, wide-tire type configuration, a first type of more robust prior art axle spindle 50 and wheel end assembly 52 therefore typically are employed, and are shown in FIG. 2. Particularly distinguishing features of first more robust prior art axle spindle 50 and wheel end assembly 52, as compared to less robust prior art axle spindle 16 and wheel end assembly 12 (FIG. 1), include a generally straight shape of the axle spindle, rather than a tapered shape, and increased length of the axle spindle and of wheel hub 51. In addition, wheel end assembly 52 includes an inboard bearing 54 and an outboard bearing 56 mounted on the outboard end of axle spindle 50 that are of the same diameter, and therefore are both generally capable of satisfactorily withstanding operational load forces of the type generated by the industry-preferred 51 mm (two-inch) offset single-wheel, wide-tire type configuration.

Inboard and outboard bearings 54, 56 are high weight capacity, low manufacturing volume bearings. For example, inboard and outboard bearings 54, 56 typically are tapered roller bearings, each having an inner diameter of about 89 mm (3.500 inches), an outer diameter of about 152.4 mm (6.000 inches), a width of about 39.688 mm (1.5625 inches), a pure radial load rating of about 21,700 Nm (16,000 pound-feet), a pure thrust load rating of about 14,900 Nm (11,000 pound-feet), and an industry standard part number of HM518445 (cone)/HM518410 (cup). A straight bearing spacer 58 optionally is disposed between inboard bearing 54 and outboard bearing 58, and generally conforms to the straight shape of axle spindle 50. Bearings 54, 56 are typically spaced such that the distance from the inboard surface of the inboard bearing to the outboard surface of the outboard bearing, indicated in FIG. 2 as X₂, is about (7.625 inches, or about) 194 millimeters.

Particular features making prior art axle spindle 50 and wheel end assembly 52 more robust, and thus able to satisfactorily withstand the forces associated with the industry-preferred 51 mm (two-inch) offset single-wheel, wide-tire type configuration, are the generally straight shape of the axle spindle, the corresponding uniform diameter of both inboard and outboard bearings 54, 56, and the increased length of the axle spindle and of wheel hub 51. However, these same features, while adding robustness to handle heavier operational loads, also undesirably add weight and cost to axle spindle 50 and wheel end assembly 52. In addition, such bearings 54, 56 are less prevalent in the heavy-duty vehicle industry, and therefore are not as readily available in repair shops, and are consequently more expensive than stock bearings.

Moreover, prior art axle spindle 50 and wheel end assembly 52 also include a large value for the relationship between distance X₂ and the maximum diameter of axle spindle 50 at the bearings, indicated as D. As mentioned above, in order to achieve the ever-present goal of reducing weight, it is desirable to shorten the length of axle spindle 50 and wheel hub 51 relative to the diameter of the axle spindle as much as possible. Therefore, the relationship between distance X₂ and diameter D, which may be expressed as a ratio R₂, becomes an indicator of how effectively a particular axle spindle and wheel end assembly achieves weight reduction through the design of axle spindle 50 and wheel hub 51. As mentioned above, distance X₂ is about 194 millimeters, and the maximum diameter D of axle spindle 50 at bearings 22, 24 is about 90 millimeters, and thus ratio R₂, which is X₂ divided by D, is about 2.16. This value for R2 is relatively large, as it is desirable to achieve a smaller ratio, such as below about 1.50. As a result, while prior-art axle spindle 50 and wheel end assembly 52 are suitable for their intended purpose, their design does not achieve an optimum weight savings.

Furthermore, prior art axle spindle 50 and wheel end assembly 52 also include a disadvantageous axial location of a mounting face 49 formed on hub 51, which does not optimize the accommodation of a dual-wheel, standard-tire configuration and a 51 mm (two-inch) offset single-wheel, wide-tire configuration. As mentioned above, the axial location of hub mounting face 49 is dictated by the load line of the wheel configuration for which axle spindle 50 and wheel end assembly 52 are designed to accommodate. Distance Z₂, which indicates the axial location of hub mounting face 49, is about 72.4 mm (2.85 inches) for certain specific wheel designs associated with prior art axle spindle 50 and wheel end assembly 52, and may be up to about 75.7 mm (2.98 inches) for other specific wheel designs associated with this axle spindle and wheel end assembly. Such a minimum length of 72.4 mm (2.85 inches) for distance Z₂ is considered to be relatively long, which indicates that the location of hub mounting face 49 is dictated by a dual-wheel, standard-tire configuration, and therefore is not optimized for both the dual-wheel, standard-tire configuration and a 51 mm (two-inch) offset single-wheel, wide-tire configuration.

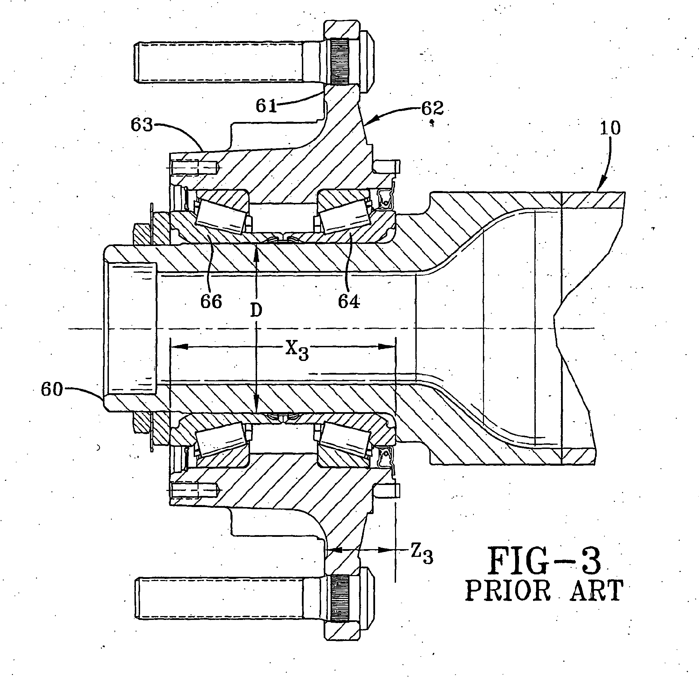

A second more robust prior art axle spindle and wheel end assembly are shown in FIG. 3 and are indicated at 60 and 62, respectively. Similar to axle spindle 50 shown in FIG. 2, axle spindle 60 is generally straight, thereby enabling inboard and outboard bearings 64, 66, respectively, to be the same diameter, and thus comparable in the operational load forces that each can handle. Axle spindle 60 is relatively short, which eliminates the need for a bearing spacer and results in a relatively short hub 63. However, this specialized design necessitates high-end, and thus costly, inboard and outboard bearings 64, 66 that abut one another, commonly referred to as unitized bearings. For example, inboard and outboard bearings 64, 66 comprise a unitized tapered roller bearing set, preferably having an inner diameter of about 90 millimeters and a width, which is measured from the inboard surface of the inboard bearing to the outboard surface of the outboard bearing, which is indicated in FIG. 3 as X₃, of about 125 millimeters. Due to the specialized nature of inboard and outboard bearings 64, 66, they do not have an industry-standard part number, as do other prior art bearings 22, 24, 54 and 56.

The value for the relationship between the width X₃ of bearings 64, 66 and the maximum diameter of axle spindle 60 at the bearings, indicated as D, is a relatively small, desirable value. More particularly, as mentioned above, width X₃ of bearings 64, 66 is about 125 millimeters, and the maximum diameter D of axle spindle 60 at bearings 64, 66 is about 90 millimeters. Thus, the relationship between distance X₃ and diameter D, which may be expressed as a ratio R₃ in which X₃ is divided by D, is about 1.39. This relatively small value is due primarily to the unitized nature of bearings 64, 66, since they abut one another, which eliminates any gap between them. As a result, the length of axle spindle 60 and wheel hub 63 can be shortened to a degree that results in an optimum reduced weight for the axle spindle and wheel end assembly 62.

In addition, prior art axle spindle 60 and wheel end assembly 62 include a location of a mounting face 61 that optimizes the accommodation of a dual-wheel, standard-tire configuration and a 51 mm (two-inch) offset single-wheel, wide-tire configuration. More particularly, distance Z₃, which indicates the axial location of hub mounting face 61, is about 39.4 mm (1.55 inches). Such a length for distance Z₃ is considered to be optimum for accommodating the respective load lines associated with a dual-wheel, standard-tire configuration and a 51 mm (two-inch) offset single-wheel, wide-tire configuration.

However, despite the desirably low value of ratio R₃, which indicates optimum reduced weight of axle spindle 60 and wheel hub 63, and relatively short distance Z₃, which indicates an optimum axial location for hub mounting face 61 for accommodation of both a dual-wheel, standard-tire configuration and a 51 mm (two-inch) offset, single-wheel configuration, as well as the ability of the design of the axle spindle and wheel end assembly 62 to handle heavier operational loads of the type created by the use of the 51 mm (two-inch) offset single-wheel, wide-tire type configuration, the high cost for inboard and outboard bearings 64, 66 creates a distinct disadvantage. That is, as mentioned above, due to their precise specialized nature, as dictated by the design of axle spindle 60 and wheel end assembly 62, bearings 64, 66 are not standard stock bearings. Therefore, they are more expensive to purchase than other stock bearings, and may be more difficult to obtain, particularly in the field such as for a repair or replacement, which may be undesirable for certain heavy-duty vehicle owners and operators. These disadvantages in turn may make axle spindle 60 and wheel end assembly 62 undesirable for such certain heavy-duty vehicle owners and operators.

Although not directly concerned with the bearing arrangement, WO 97/48919 discloses a vehicle design in which the inner and outer bearings are unitized, and abut one another. The document aims to dampen vibrations, and reduce the risk of crack formation in a brake disc.

As mentioned above, the lack of robustness of prior art axle spindle 16 and wheel end assembly 12, and the high costs and/or weight of more robust prior art axle spindles 50, 60 and wheel end assemblies 52, 62, respectively, has created a need in the art for a lightweight and economical, yet robust, axle spindle and wheel end assembly that are capable of selectively accommodating a dual-wheel, standard-tire configuration and a 51 mm (two-inch)offset single-wheel, wide-tire configuration. The present invention satisfies these needs, as will now be described.

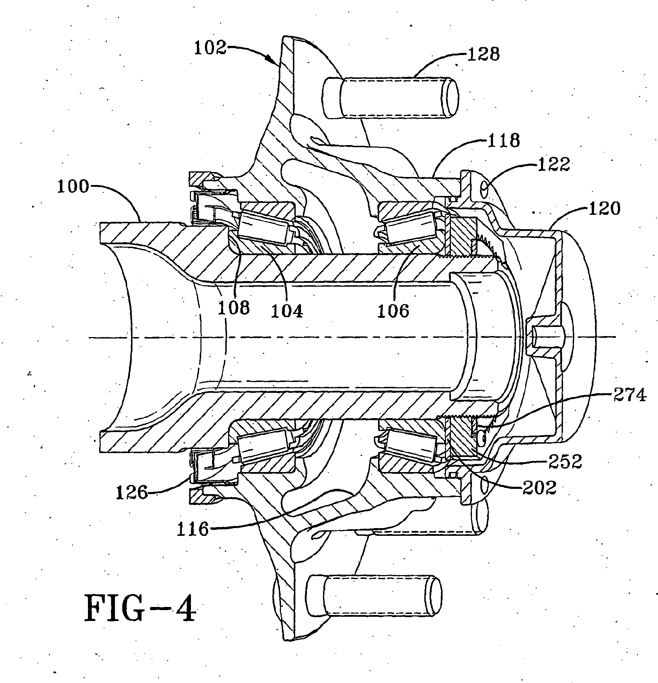

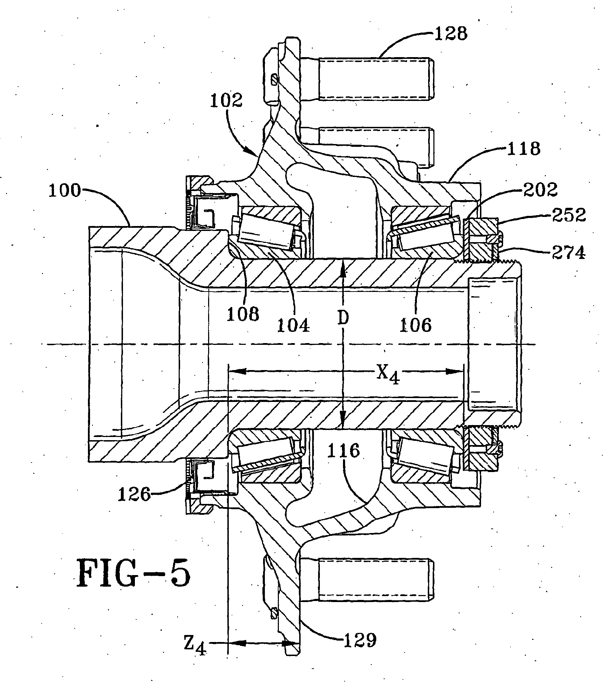

Turning now to FIGS. 4 and 5, an axle spindle and a wheel end assembly of the present invention are indicated generally at 100 and 102, respectively. Axle spindle 100 is straight and is shorter than prior art axle spindles 16 and 50 to reduce weight. Wheel end assembly 102 includes a bearing assembly having an inboard bearing 104 and an outboard bearing 106 that are the same diameter and are immovably mounted on the outboard end of axle spindle 100. More particularly, inboard bearing 104 is mounted on the outer diameter of axle spindle 100 with its inboard surface in abutment with a shoulder 108 formed in the axle spindle. Inboard and outboard bearings 104, 106 preferably are standard heavy-duty vehicle stock bearings and are spaced-apart from one another. The robust nature of outboard bearing 106, being of about the same inner diameter as inboard bearing 104, enables a user to achieve a preload setting that increases the life of the bearing when compared to certain less robust outboard bearings of the prior art. For example, inboard and outboard bearings 104, 106 preferably are tapered roller bearings, each having an inner diameter of about 90 millimeters, an outer diameter of about 147 millimeters, a width of about 40 millimeters, a pure radial load rating of about 20,100 Nm (14,800 pound-feet), a pure thrust load rating of about 11,420 Nm (8,420 pound-feet), and an industry standard part number of HM218248 (cone)/HM218210 (cup).

Alternatively, inboard and outboard bearings 104, 106 may be selected from one of the following non-stock bearing groups, consisting of: higher quality, tighter tolerance bearings, known in the art as half-stand bearings; higher quality precision ground race roller bearings; or other special bearings. Nonetheless, if non-stock bearings are utilized, it is important to note that axle spindle 100 and wheel end assembly 102 will still accept standard stock bearings when the non-stock bearings need to be replaced, as will be described in greater detail below.

A cavity 116 is formed between inboard and outboard bearings 104, 106, and a short, straight bearing spacer (not shown) optionally is disposed between the bearings in the cavity, if desired, to maintain spacing between the bearings. An exemplary bearing spacer, if one is used, is more fully described in a separate application being filed by the same assignee, Hendrickson USA, L.L.C. A nut 252 also threadably engages the outboard end of axle spindle 100, and via an outer washer 274 and an optional inner washer 202, secures bearings 104, 106 and any bearing spacer in place. Nut 252 is more fully described in a separate application being filed concurrently herewith by the same assignee, Hendrickson USA, L.L.C. Bearings 104, 106 are typically spaced such that the distance from the inboard surface of the inboard bearing proximate shoulder 108 to the outboard surface of outboard bearing proximate inner washer 202, indicated in FIG. 5 as X₄, is within a range of from about 125 millimeters to about 135 millimeters. Preferably, distance X₄ is about 130 millimeters. The range of from about 125 millimeters to about 135 millimeters is achieved by using an outboard bearing 106 with a different width, or by adjusting the axial position of the outboard bearing.

A wheel hub 118 is rotatably mounted on inboard and outboard bearings 104, 106 in a manner well known to those skilled in the art. A hubcap 120 is mounted on the outboard end of hub 118 by a plurality of bolts (not shown) that each pass through a respective one of a plurality of openings 122 formed in the hubcap, and threadably engage a respective one of a plurality of aligned threaded openings (not shown) formed in the hub. In this manner, hubcap 120 closes the outboard end of wheel end assembly 102. Hubcap 120 is more fully described in a separate application being filed concurrently herewith by the same assignee, Hendrickson USA, L.L.C. A main continuous seal 126 is rotatably mounted on the inboard end of wheel end assembly 102 and closes the inboard end of the assembly. More particularly, seal 126 is mounted on wheel end assembly 102 in a suitable manner and radially bridges hub 118 and axle spindle 100 to seal cavity 116. In order to maintain proper lubrication and operation of inboard and outboard bearings 104, 106, a suitable amount of lubricant (not shown) is introduced into cavity 116. A plurality of interference fit studs 128 are used to mount a brake drum, tire rim and tire (not shown) against a mounting face 129 of hub 118 and thus on wheel end assembly 102.

Axle spindle 100 and wheel end assembly 102 are of a more robust construction, which enables them to selectively accommodate a dual-wheel, standard-tire configuration and a single-wheel, wide-tire configuration, including a single wheel configuration having a 51 mm (two-inch) offset. More particularly, axle spindle 100 is generally straight, enabling both inboard and outboard bearings 104, 106 to be of the same diameter, thereby handling large operational loads. For example, axle spindle 100 and wheel end assembly 102 include a capacity rating of 4.54 tonnes (10,000 pounds) with a single 51 mm (two-inch) offset wheel, and a capacity rating of 5.22 tonnes (11,500 pounds) with a pair of dual steel wheels. Since there are two axle spindles 100 and two wheel end assemblies 102 per axle, the axle spindle and wheel end assembly of the invention thus include an axle rating of 9.08 tonnes (20,000 pounds) for a single-wheel, 51 mm (two-inch) offset wide-tire configuration, and a 10.44 tonnes (23,000 pound) axle rating for a dual-wheel, standard-tire configuration. It can therefore be seen that the present invention provides a lighter-weight package having a relatively short axle spindle 100 and a wheel end assembly 102, which mount two bearings 104, 106 of the stock type closer together, and thereby provides tighter tolerance control for the alignment of the wheel end assembly, which improves bearing life.

The optimization of weight achieved by axle spindle 100 and wheel end assembly 102 is shown by the relationship between distance X₄, which is the distance from the inboard surface of inboard bearing 104 to the outboard surface of outboard bearing 106, and the maximum diameter of the axle spindle at the bearings, indicated as D. The relationship between distance X₄ and diameter D may be expressed as a ratio R₄. As mentioned above, distance X₄ preferably is about 130 millimeters, and the maximum diameter D of axle spindle 100 at bearings 104, 106 is about 90 millimeters, and thus ratio R₄, which is X₄ divided by D, is about 1.44. When, as mentioned above, distance X₄ is 125 millimeters, R₄ is about 1.39, and when it is 135 millimeters, it is about 1.50. Thus, ratio R₄, ranging from about 1.39 to about 1.50, is smaller than the prior art ratio R₁ of 1.81 millimeters and the prior art ratio R₂ of 2.16 millimeters, showing that axle spindle 100 and wheel end assembly 102 effectively achieve significant weight reduction through a design that effectively shortens the length of the axle spindle and wheel hub 118. In addition, such a weight reduction is achieved using standard bearings 104, 106 that include a gap between them, rather than special unitized bearings 64, 66 found in prior art axle spindle 60 and wheel end assembly

In addition, axle spindle 100 and wheel end assembly 102 include a location of hub mounting face 129 that optimizes the accommodation of a dual-wheel, standard-tire configuration and a 51 mm (two-inch) offset single-wheel, wide-tire configuration in an economical manner. More particularly, distance Z₄, which indicates the axial location of hub mounting face 129, is about 39.4 mm (1.55 inches). Such a length for distance Z₄ is considered to be optimum for accommodating the respective load lines associated with a dual-wheel, standard-tire configuration and a 51 mm (two-inch) offset single-wheel, wide-tire configuration. This optimization is achieved using standard bearings 104, 106 that include a gap between them, rather than special unitized bearings 64, 66 found in prior art axle spindle 60 and wheel end assembly 62.

While inboard and outboard bearings 104, 106 preferably are of the stock type, axle spindle 100 and wheel end assembly 102 of the present invention also accept non-stock bearings, such as half-stand bearings or precision ground race roller bearings. By accepting both stock and non-stock types of bearings, axle spindle 100 and wheel end assembly 102 enable the use by heavy-duty vehicle owners and/or operators of higher quality non-stock bearings for inboard and outboard bearings, but yet provide the convenient and economical option of field replacement with readily available standard stock bearings.

In this manner, axle spindle 100 and wheel end assembly 102 of the present invention provide a more robust construction than prior art less robust axle spindle 16 and wheel end assembly 12. As a result, axle spindle 100 and wheel end assembly 102 of the present invention are able to satisfactorily withstand the forces associated with a 51 mm (two-inch) offset single-wheel, wide-tire type configuration, while prior art less robust axle spindle 16 and wheel end assembly 12 cannot do so, due to the taper of the prior art axle spindle and correspondingly reduced diameter of outboard bearing 24. In addition, axle spindle 100 and wheel hub 118 are shorter in length than prior art axle spindle 16 and wheel hub 42, which reduces the weight of the axle spindle and wheel end assembly 102 of the present invention. Moreover, it has been discovered that the close proximity of inboard and outboard bearings 104, 106 to one another that is achieved by shorter spindle 100 and shorter hub 118, and the equal diameter of the bearings, enables a user to capitalize on tighter tolerance control of the bearing settings, which improves bearing life.

Axle spindle 100 and wheel end assembly 102 of the present invention are lighter in weight and are more economical than first robust axle spindle 50 and wheel end assembly 52 of the prior art. That is, the relatively short length of axle spindle 100 reduces the weight of the axle spindle, thereby having significantly less weight than prior art axle spindle 50. In addition, hub 118 may be of a compact design and thus shorter than prior art hub 51, and preferably is made from aluminum or austempered ductile iron, thereby contributing to further weight savings. Also, the close proximity of inboard and outboard bearings 104, 106 to one another that is achieved by shorter spindle 100 and shorter hub 118 enables a user to capitalize on tight tolerance control of the alignment of wheel end assembly 102 on the axle spindle, which provides a bearing life that is comparable to expensive, low-volume bearings 54, 56 used with prior art axle spindle 50 and wheel end assembly 52, with a lighter-weight construction. Moreover, the acceptance and/or use of stock bearings 104, 106 in wheel end assembly 102 of the present invention creates a significant cost savings when compared to the use of bearings 54, 56 in prior art wheel end assembly 52, which are less readily available in heavy-duty vehicle repair facilities. Thus, this acceptance and/or use of stock bearings 104, 106 also facilitates more economical, faster and more convenient repair of wheel end 102 of the present invention, as compared to repair of prior art wheel end 52.

Axle spindle 100 and wheel end assembly 102 of the present invention also are significantly more economical than second robust axle spindle 60 and wheel end assembly 62 of the prior art. That is, the acceptance and/or use of stock inboard and outboard bearings 104, 106 significantly reduces the cost of wheel end assembly 102 when compared to prior art wheel end assembly 62, which necessitates the use of expensive, special unitized bearings 64, 66. Since bearings 104, 106 are stock bearings, they are also more readily available in heavy-duty vehicle repair facilities than special prior art bearings 64, 66. As a result, axle spindle 100 and wheel end assembly 102 of the invention are more economical than prior art axle spindle 60 and wheel end assembly 62, and are easier and more convenient to repair.

Thus, the combination of a more robust construction, lighter weight and lower cost allow an owner of a heavy-duty vehicle to use axle spindle 100 and wheel end assembly 102 of the present invention to selectively accommodate a conventional dual-wheel, standard-tire configuration and a single-wheel, wide-tire configuration, including a 51 mm (two-inch) offset wheel, in a weight-competitive and economical manner. Moreover, such accommodation is achieved while maintaining a bearing life for inboard and outboard bearings 104, 106 that is acceptable in the heavy-duty vehicle industry.

In accordance with the above description, the present invention contemplates a range for ratio R, which is the distance X from the inboard surface of inboard bearing 104 to the outboard surface of outboard bearing 106 divided by the maximum diameter D of axle spindle 100 at the bearings. Ratio R for axle spindle 100 and wheel end assembly 102 of the present invention is from about 1.15 to about 1.75, and preferably from about 1.30 to about 1.60, and most preferably from about 1.39 to about 1.50. Also in accordance with the above description, the present invention contemplates a range for distance Z, which is the axial distance from the inboard surface of inboard bearing 104 to a wheel mounting face 129 formed on wheel hub 118. Distance Z is from about 30.5 mm (1.20 inches) to about 43.2 mm (1.70 inches), and preferably is about 39.4 mm (1.55 inches).

The present invention also includes a method for selectively accommodating a conventional dual-wheel, standard-tire configuration and a single-wheel, wide-tire configuration on an axle spindle and a heavy-duty wheel end assembly in an economical and lightweight manner without substantial modifications to the frame, subframe, axle and/or suspension assemblies of the heavy-duty vehicle. The method includes steps in accordance with the description that is presented above and shown in FIGS. 4 and 5.

It is understood that the present invention has been described with reference to a specific embodiment, and that this description and illustration is by way of example and not by way of limitation. Potential modifications and alterations will occur to others upon a reading and understanding of this disclosure, and it is understood that the invention includes all such modifications and alterations and equivalents that fall within the scope of protection as defined by the claims.

Accordingly, the axle spindle and wheel end assembly of the present invention is simplified, provides an effective, safe, inexpensive, and efficient structure which achieves all the enumerated objectives, provides for eliminating difficulties encountered with prior-art axle spindles and wheel end assemblies, and solves problems and obtains new results in the art.

In the foregoing description, certain terms have been used for brevity, clearness and understanding; but no unnecessary limitations are to be implied therefrom beyond the requirements of the prior art, because such terms are used for descriptive purposes and are intended to be broadly construed.

Moreover, the description and illustration of the invention is by way of example, and the scope of the invention is not limited to the exact details shown or described.

Having now described the features, discoveries and principles of the invention, the manner in which the improved axle spindle and wheel end assembly are constructed, arranged and used, the characteristics of the construction and arrangement, and the advantageous, new and useful results obtained; the new and useful steps, structures, devices, elements, arrangements, parts and combinations, are set forth in the appended claims.

## Claims

1. An axle spindle (100) and wheel end assembly (102) combination for a heavy-duty vehicle, said heavy-duty vehicle including an axle having a central portion and a pair of said axle spindles (100), said axle central portion having a pair of ends and each one of said pair of axle spindles (100) being connected to a respective one of said central portion ends, the heavy-duty vehicle further including a pair of wheel end assemblies (102), each one of said pair of wheel end assemblies being rotatably mounted on a respective one of said axle spindles (100), each one of said axle spindle and wheel end assembly combinations comprising:
an inboard bearing (104) immovably mounted on said axle spindle (100);
an outboard bearing (106) immovably mounted on said axle spindle and spaced apart outboardly of said inboard bearing (104), whereby said wheel end assembly is capable of utilizing heavy-duty vehicle stock-type bearings for said inboard and outboard bearings, and
a wheel hub (118) rotatably mounted on said inboard and said outboard bearings (104,106) and having a wheel mounting face (129),
**characterised in that**
the inboard and outboard bearings (104,106) have respective inner diameters of generally the same size;
the ratio between the distance (X₄) from the inboard surface of the inboard bearing (104) to the outboard surface of the outboard bearing (106) and the maximum outer diameter (D) of said axle spindle (100) at said inboard and outboard bearings is in a range of from 1.15 to 1.75, and
the axial distance (Z₄) from the inboard surface of said inboard bearing (104) to the wheel mounting face (129) of said wheel hub (118) is from 30.5 mm (1.20 inches) to 43.2 mm (1.70 inches);
whereby said wheel end assembly is able to accommodate either of a dual-wheel, standard-tire configuration, and a single-wheel, wide-tire configuration including a wheel having a 51 mm (two-inch) offset.

2. The axle spindle and wheel end assembly combination for a heavy-duty vehicle of claim 1 in which said ratio between the distance (X₄) from the inboard surface of said inboard bearing (104) to the outboard surface of said outboard bearing (106) and the maximum outer diameter (D) of said axle spindle (100) at said inboard and outboard bearings is in a range of from 1.30 to 1.60.

3. The axle spindle and wheel end assembly combination for a heavy-duty vehicle of claim 2 in which said ratio between the distance (X₄) from the inboard surface of said inboard bearing (104) to the outboard surface of said outboard bearing (106) and the maximum outer diameter (D) of said axle spindle (100) at said inboard and outboard bearings is in a range of from 1.39 to 1.50.

4. The axle spindle and wheel end assembly combination for a heavy-duty vehicle of any one of claims 1 to 3 wherein said ratio is based upon a value of about 90 mm for said maximum outer diameter (D) of said axle spindle (100) at said inboard and outboard bearings (104,106).

5. The axle spindle and wheel end assembly combination for a heavy-duty vehicle of any one of the preceding claims in which said distance (X₄) from the inboard surface of said inboard bearing (104) to the outboard surface of said outboard bearing (106) is from 125 to 135 mm.

6. The axle spindle and wheel end assembly combination for a heavy-duty vehicle of any one of the preceding claims in which said axial distance (Z₄) from the inboard surface of said inboard bearing (104) to the wheel mounting face (129) formed on said wheel hub (118) is about 39.4 mm (1.55 inches).

7. The axle spindle and wheel end assembly combination for a heavy-duty vehicle of any one of the preceding claims in which a spacer is disposed between said inboard and outboard bearings (104,106).

## Patentansprüche

1. Achszapfen- (100) und Radendanordnungs- (102) Kombination für ein Schwerlastfahrzeug, wobei das Schwerlastfahrzeug eine Achse mit einem Mittelabschnitt und ein Paar der genannten Achszapfen (100) umfasst, wobei der Achsenmittelabschnitt ein Paar von Enden aufweist und jeder des Paares von Achszapfen (100) mit einem dazugehörigen der Mittelabschnittenden verbunden ist, wobei das Schwerlastfahrzeug ferner ein Paar von Radendanordnungen umfasst, von denen jede auf einem dazugehörigen der Achszapfen (100) rotierbar angebracht ist, wobei jede der Achszapfen- und Radendanordnungskombinationen Folgendes umfasst:
ein Innenseitenlager (104), das auf dem Achszapfen (100) unbewegbar angebracht ist;
ein Außenseitenlager (106), das auf dem Achszapfen unbewegbar angebracht und außenseitig zu dem Innenseitenlager (104) beabstandet ist, wobei die Radendanordnung Schwerlastfahrzeugstandard-Lager als Innenseiten- und Außenseitenlager verwenden kann; und
eine Radnabe (118), die auf dem Innenseiten- und dem Außenseitenlager (104, 106) rotierbar angebracht ist und eine Radanbringungsseite (129) aufweist;
**dadurch gekennzeichnet, dass**
das Innenseiten- und das Außenseitenlager (104, 106) jeweils Innendurchmesser von im Allgemeinen derselben Größe aufweisen;
wobei das Verhältnis zwischen dem Abstand (X₄) von der Innenseitenfläche des Innenseitenlagers (104) zu der Außenseitenfläche des Außenseitenlagers (106) und dem Maximalaußendurchmesser (D) des Achszapfens (100) an dem Innenseiten- und dem Außenseitenlager in einem Bereich von 1,15 bis 1,75 liegt, und
der Axialabstand (Z₄) von der Innenseitenfläche des Innenseitenlagers (104) zu der Radanbringungsseite (129) der Radnabe (118) zwischen 30,5 mm (1,20 Zoll) und 43,2 mm (1,70 Zoll) beträgt;
wobei die Radendanordnung entweder eine Doppelrad-Standardreifen-Konfiguration oder eine Einzelrad-Breitreifen-Konfiguration aufnehmen kann, die ein Rad mit einem Achsversatz von 51 mm (2 Zoll) aufweist.

2. Achszapfen- und Radendanordnungskombination für ein Schwerlastfahrzeug nach Anspruch 1, wobei das Verhältnis zwischen dem Abstand (X₄) von der Innenseitenfläche des Innenseitenlagers (104) zu der Außenseitenfläche des Außenseitenlagers (106) und dem Maximalaußendurchmesser (D) des Achszapfens (100) an dem Innenseiten- und dem Außenseitenlager in einem Bereich von 1,30 bis 1,60 liegt.

3. Achszapfen- und Radendanordnungskombination für ein Schwerlastfahrzeug nach Anspruch 2, worin das Verhältnis zwischen dem Abstand (X₄) von der Innenseitenfläche des Innenseitenlagers (104) zu der Außenseitenfläche des Außenseitenlagers (106) und dem Maximalaußendurchmesser (D) des Achszapfens (100) an dem Innenseiten- und dem Außenseitenlager in einem Bereich von 1,39 bis 1,50 liegt.

4. Achszapfen- und Radendanordnungskombination für ein Schwerlastfahrzeug nach einem der Ansprüche 1 bis 3, worin das Verhältnis für den Maximalaußendurchmesser (D) des Achszapfens (100) an dem Innenseiten- und dem Außenseitenlager (104, 106) auf einem Wert von ungefähr 90 mm basiert.

5. Achszapfen- und Radendanordnungskombination für ein Schwerlastfahrzeug nach einem der vorangegangenen Ansprüche, worin der Abstand (X₄) von der Innenseitenfläche des Innenseitenlagers (104) zu der Außenseitenfläche des Außenseitenlagers (106) zwischen 125 und 135 mm liegt.

6. Achszapfen- und Radendanordnungskombination für ein Schwerlastfahrzeug nach einem der vorangegangenen Ansprüche, worin der Axialabstand (Z₄) von der Innenseitenfläche des Innenseitenlagers (104) zu der auf der Radnabe (118) ausgebildeten Radanbringungsseite (129) ungefähr 39,4 mm (1,55 Zoll) beträgt.

7. Achszapfen- und Radendanordnungskombination für ein Schwerlastfahrzeug nach einem der vorangegangenen Ansprüche, worin zwischen dem Innenseitenlager und dem Außenseitenlager (104, 106) ein Abstandselement angeordnet ist.

## Revendications

1. Combinaison composée d'une fusée d'essieu (100) et d'un ensemble d'extrémité de roue (102) pour un véhicule utilitaire lourd, ledit véhicule utilitaire lourd comprenant un essieu ayant une partie centrale et une paire desdites fusées d'essieu (100), ladite partie centrale d'essieu ayant une paire d'extrémités et chacune de ladite paire de fusées d'essieu (100) étant raccordée à une extrémité respective desdites extrémités de partie centrale, le véhicule utilitaire lourd comprenant en outre une paire d'ensembles d'extrémité de roue (102), chacun de ladite paire d'ensembles d'extrémité de roue étant monté de manière rotative sur une fusée respective desdites fusées d'essieu (100), chacune desdites combinaisons composées de fusée d'essieu et d'ensemble d'extrémité de roue comprenant :
un palier interne (104) monté de manière immobile sur ladite fusée d'essieu(100) ;
un palier externe (106) monté de manière immobile sur ladite fusée d'essieu et éloigné vers l'extérieur dudit palier interne (104), moyennant quoi, ledit ensemble d'extrémité de roue peut utiliser des paliers de type en stock de véhicule utilitaire lourd pour lesdits paliers interne et externe, et
un moyeu de roue (118) monté de manière rotative sur lesdits paliers interne et externe (104, 106) et ayant une face de montage de roue (129),
**caractérisée en ce que** :
les paliers interne et externe (104, 106) ont des diamètres internes respectifs généralement de la même taille ;
le rapport entre la distance (X₄) de la surface interne du palier interne (104) jusqu'à la surface externe du palier externe (106) et le diamètre externe maximum (D) de ladite fusée d'essieu (100) au niveau desdits paliers interne et externe est dans la plage de 1,15 à 1,75, et
la distance axiale (Z₄) de la surface interne dudit palier interne (104) à la face de montage de roue (129) dudit moyeu de roue (118) est de 30,5 mm (1,20 pouces) à 43,2 mm (1,70 pouces) ;
moyennant quoi ledit ensemble d'extrémité de roue peut accepter une configuration de pneu standard à deux roues, et une configuration de pneu large à une roue comprenant une roue ayant un décalage de 51 mm (2 pouces).

2. Combinaison composée d'une fusée d'essieu et d'un ensemble d'extrémité de roue pour un véhicule utilitaire lourd selon la revendication 1, dans laquelle ledit rapport entre la distance (X₄) de la surface interne dudit palier interne (104) jusqu'à la surface externe dudit palier externe (106) et le diamètre externe maximum (D) de ladite fusée d'essieu (100) au niveau desdits paliers interne et externe est dans une plage de 1,30 à 1,60.

3. Combinaison composée d'une fusée d'essieu et d'un ensemble d'extrémité de roue pour un véhicule utilitaire lourd selon la revendication 2, dans laquelle ledit rapport entre la distance (X₄) de la surface interne dudit palier interne (104) jusqu'à la surface externe dudit palier externe (106) et le diamètre externe maximum (D) de ladite fusée d'essieu (100) au niveau desdits paliers interne et externe est dans une plage de 1,39 à 1,50.

4. Combinaison composée d'une fusée d'essieu et d'un ensemble d'extrémité de roue pour un véhicule utilitaire lourd selon l'une quelconque des revendications 1 à 3, dans laquelle ledit rapport est basé sur une valeur d'environ 90 mm pour ledit diamètre externe maximum (D) de ladite fusée d'essieu (100) au niveau desdits paliers interne et externe (104, 106).

5. Combinaison composée d'une fusée d'essieu et d'un ensemble d'extrémité de roue pour un véhicule utilitaire lourd selon l'une quelconque des revendications précédentes, dans laquelle ladite distance (X₄) de la surface interne dudit palier interne (104) jusqu'à la surface externe dudit palier externe (106) est de 125 à 135 mm.

6. Combinaison composée d'une fusée d'essieu et d'un ensemble d'extrémité de roue pour un véhicule utilitaire lourd selon l'une quelconque des revendications précédentes, dans laquelle ladite distance axiale (Z₄) de la surface interne dudit essieu interne (104) jusqu'à une face de montage de roue (129) formée sur ledit moyeu de roue (118) est d'environ 39,4 mm (1,55 pouces).

7. Combinaison composée d'une fusée d'essieu et d'un ensemble d'extrémité de roue pour un véhicule utilitaire lourd selon l'une quelconque des revendications précédentes, dans laquelle un dispositif d'espacement est disposé entre lesdits paliers interne et externe (104, 106).
